# EUROPEAN PATENT SPECIFICATION

(11) **EP 3 803 224 B1**
(45) Date of publication and mention of the grant of the patent: **10.04.2024**
(21) Application number: 19726612.5
(22) Date of filing: 20.05.2019
(51) Int. Cl.: F24F 11/56, F24F 11/52, G08C 17/00, G08C 17/02, G06F 3/01

(54) **A METHOD OF GENERATING FOR A USER AUGMENTED REALITY INFORMATION RELATED TO AN HVAC COMPONENT**
VERFAHREN ZUR ERZEUGUNG VON INFORMATIONEN DER ERWEITERTEN REALITÄT IN ZUSAMMENHANG MIT EINEM HVAC-BAUELEMENT FÜR EINEN BENUTZER
PROCÉDÉ DE GÉNÉRATION POUR UN UTILISATEUR D'INFORMATIONS DE RÉALITÉ AUGMENTÉE RELATIVES À UN COMPOSANT DE CVCA

(30) Priority: 29.05.2018 CH 6832018
(43) Date of publication of application: 14.04.2021
(73) Proprietor: Belimo Holding AG, 8340 Hinwil (CH)
(72) Inventor: STEINER, Marc, Bennau 8836 (CH); GROGG, Silvio, Wetzikon 8620 (CH)
(74) Representative: Rentsch Partner AG
(86) International application number: PCT/EP2019/062978
(87) International publication number: WO 2019/228842

(56) References cited:
- WO-A1-2016/171512
- WO-A1-2017/207634
- US-A1- 2010 261 465
- US-A1- 2012 064 923
- US-A1- 2014 064 736
- US-A1- 2016 071 319

## Description

### TECHNICAL FIELD

The invention relates to a method and a mobile communication device for generating for a user augmented reality information related to an HVAC component.

### BACKGROUND OF THE INVENTION

HVAC systems often involve a plurality of HVAC components installed at different sites of a facility or a building. Typically, the HVAC components, such as valves and actuators, sensors, thermostats etc. are each controllable and exhibit varying states depending on operation of the HVAC component. For monitoring, controlling and maintenance purposes, it is therefore desired to obtain fast and efficient information on the status of each HVAC component in an HVAC system.

For regulating the operation of HVAC systems, remotely located central control systems, such as Building Automation Systems are typically used. However, on-site maintenance is regularly required, where field workers often face uncertainty about the identification of the respective HVAC component among the plurality of HVAC components in the HVAC system. HVAC components being installed in places with limited or barred accessibility may further impede fast identification and status verification. For example, an HVAC component may be installed within a duct or behind a wall and thus not be easy accessible or at least not visible to a field worker. Additionally, the HVAC component may be placed in an orientation where control elements on the HVAC components are difficult to activate manually. Therefore, ease of access for controlling operation of the HVAC components is likewise desired.

Recently, augmented reality technology has been considered as a versatile solution for enhanced interaction with real-world entities, such as electronic devices. Augmented reality is a term for the real-time use of computer-generated information in the form of text, graphics, audio and other virtual enhancements integrated with real-world objects. In particular, augmented reality can be used to add an interactive dimension to the real world by overlaying the computer-generated information together with accessible user interface elements to the real-world object.

US 2010/261465 A1 describes a method comprising obtaining identification information from a device such as a thermostat with a cell phone, identifying and downloading application software for the corresponding device from a remote memory, and interacting with the device through the application software via a graphical user interface GUI, with the GUI displayed as an augmented reality image over the captured image of the thermostat. In one example, a user may trigger a command to increase or decrease the ambient setpoint temperature by interacting with corresponding buttons of the displayed GUI. The command is then transmitted from the cell phone to the thermostat via a server. Acceptance of the command by the thermostat is indicated on the display of the cell phone in response to receiving a confirmatory message that is relayed back from the thermostat to the cell phone.

US 2012/064923 A1 discloses a method of energy management at a site using a mobile device. A graphical user interface GUI is displayed within the display screen of the mobile device. A map presenting the site location, the plurality of zones disposed about the site location, and the current location of the mobile device is displayed within the GUI.

WO 2017/207634 A1 describes a decentralized diagnosis of HVAC systems whereby lifetime information related to HVAC components is received from a cloud-based computer system.

WO 2016/172512 A1 describes a remote control device that can identify and control a plurality of devices, e.g. televisions, air conditioners, music systems, etc. a transmitter of the remote control 200 transmits a call signal to a device to which the remote control 200 is directed. After detection of the call signal, the device sends an identification signal to the remote control 200, by means of which a processor of the remote control 200 identifies the corresponding device. Based on the identification, the remote control 200 can transmit a command to the device.

US 2014/064736 A1 describes an information processing apparatus, such as a smartphone, in a home network including e.g. a TV, a PC and a Blu-ray disc recorder. The smartphone can designate an apparatus in the network to be a communication counter-party by acquiring identification information based on an optical signal emitted from said apparatus. In an embodiment, the smartphone verifies the apparatus information received from the apparatus, such as the TV, using apparatus information stored on a server in order to specify which apparatus in the network is the photographed apparatus.

### SUMMARYOFTHE INVENTION

It is an object of the invention to provide a method and a mobile communication device for generating for a user augmented reality information related to an HVAC component, which at least partially improves the prior art of controlling HVAC components of an HVAC system.

According to the present invention, these objects are achieved by the features of the independent claims. In addition, further advantageous embodiments follow from the dependent claims and the description.

According to an aspect of the invention, there is provided a method of generating for a user augmented reality information related to an HVAC component as set out in independent claim 1.

The cloud-based computer system makes it possible that each HVAC component can be remotely monitored and controlled independently from the location of the user. Further, data and support regarding the HVAC system can be readily provided anywhere and at any time. However, for large HVAC systems including a plurality of HVAC components, it often occurs that a specific HVAC component is not actually installed as indicated and recorded in the cloud-based computer system, for example at the specific registered position, which hampers on-site inspection, as described above. The inventive method provides the advantage that the HVAC components connected to the cloud-based computer system can be inspected on-site by visually verifying the execution of an operation by the HVAC component initiated by a control command which is transmitted from the mobile communication device via the cloud-based computer system to the HVAC component. Generating the control command responsive to activation of the user interface element which is displayed within the augmented reality information, provides the advantage of ease of access for controlling operation of the HVAC component, independent of the actual physical accessibility of the HVAC component.

In particular, the inventive method allows to perform target/current-status comparison using verification of the execution of an operation due to a command transmitted via the cloud-based computer system and receiving direct feedback from the HVAC component.

Obtaining the component identification may be achieved visually, for example by way of a bar code, a QR code, LED data transfer or visible fiducial markers, wherein the bar code, QR code, the LED or the visible fiducial markers are arranged at the HVAC component.

In some embodiments, the component identification may be obtained non-visually, for example by using RFID technology, in particular NFC, Bluetooth or Li-Fi using an LED. Non-visual transmission of the component identification in case of Li-Fi using an LED is understood as the switching rate of the LED being too high for the human eye to be recognized.

In some embodiments, the component identification comprises login credentials for the user of the mobile communication device. Using the login credentials, the user of the mobile communication device may access the cloud-based computer system, for example for transmitting a control command via the cloud-based computer system to the HVAC component. The login credentials may be temporarily active such that access to the cloud-based computer system may be possible only during a limited time period.

The method further comprises the circuit of the mobile communication device directly receiving current status information from the HVAC component, and generating augmented reality information which visualizes execution of the operation by the HVAC component, using the current status information, enabling visual verification of the operation of the HVAC component by the user when the HVAC component is not visible to the user.

For example, the HVAC component may be installed in a duct or behind wall. Further, the control command may be directed to an operation of the HVAC component for which the execution may not be externally visible, such as activating a sensor or interrupting a communication channel etc.

In an embodiment, the method further comprises the circuit of the mobile communication device locally generating and displaying additional HVAC component information within the augmented reality information. The additional HVAC component information may include information about specific properties of the HVAC component which may help for installing the HVAC component. The additional HVAC component information may be recorded in a storage of the mobile communication device after being received from the cloud-based computer system.

In an embodiment, the method further comprises the circuit of the mobile communication device receiving from the cloud-based computer system target status information of the HVAC component related to the control command, and generating augmented reality information using a comparison of current status information, received from the HVAC component, with the target status information of the HVAC component, received from the cloud-based computer system.

In particular, this enables a target/current-status comparison where the operation of the HVAC component is initiated by a user interface element which includes a degree of abstraction of the operation. For example, the user interface element may display an element "verify the connection of the HVAC component to the power supply". For the activation of said user interface element, a variety of control commands may be generated in order to verify the supply of power to the HVAC component. For example, a control command to change the angle of the damper blade by a certain amount may be generated and transmitted via the cloud-based computer system to the HVAC component for verifying the supply of power to the HVAC component. Upon transmitting said control command, the mobile communication device may receive from the cloud-based computer system the target status information that the angle of the damper blade should be changed by the specific amount as defined by the control command. By comparing current status information about the current angle change of the damper blade with said target status information, augmented reality information may be generated allowing to verify the element "verify the connection of the HVAC component to the power supply", as initiated by the user interface element.

In an embodiment, the method further comprises the circuit of the mobile communication device displaying within the augmented reality information a confirmation notification for a correspondence of the current status information and the target status information, and an error notification for a deviation of the current status information from the target status information.

In an embodiment, the method further comprises the circuit of the mobile communication device receiving from the cloud-based computer system lifetime information related to the HVAC component, and displaying the lifetime information within the augmented reality information.

The lifetime information may be used to display and indicate within the augmented reality information that the HVAC component has reached its end-of-life.

The method further comprises the circuit of the mobile communication device generating an identification command, and transmitting the identification command to the HVAC component, the identification command commanding the HVAC component to generate the component identification.

This provides the advantage that the HVAC component is not required to generate the component identification continuously, but only upon transmission of the identification command to the HVAC component. For example, a Bluetooth module of the HVAC component may be activated only upon transmission of the identification command for generating the component identification.

In an embodiment, the method further comprises the circuit of the mobile communication device displaying within the augmented reality information a drilling template for drilling holes.

After installation of an HVAC component, it may be desirable to mount additional components in addition to the installed HVAC component. For this purpose, holes may be drilled, for example into a wall or a duct where the HVAC component is installed, in order to mount the additional component. Using the drilling template displayed within the augmented reality information provides the advantage that the field worker does not have to carry the drilling templates for the various HVAC components and additional components during on-site inspection.

According to a further aspect, the present invention is also directed to a mobile communication device for generating for a user augmented reality information related to an HVAC component as set out in independent claim 6.

The mobile communication device may be for example a smartphone, a smart glass, a tablet PC etc.

In an embodiment, the circuit is further configured to receive from the cloud-based computer system target status information of the HVAC component related to the control command, and to generate augmented reality information using a comparison of current status information received from the HVAC component with the target status information of the HVAC component received from the cloud-based computer system.

In an embodiment, the circuit is further configured to display within the augmented reality information a confirmation notification for a correspondence of the current status information and the target status information, and an error notification for a deviation of the current status information form the target status information.

In an embodiment, the circuit is further configured to receive from the cloud-based computer system lifetime information related to the HVAC component and to display the lifetime information within the augmented reality information.

The circuit is further configured to generate an identification command and to transmit the identification command to the HVAC component, the identification command commanding the HVAC component to generate the component identification.

In an embodiment, the circuit is further configured to display within the augmented reality information a drilling template for drilling holes.

According to a further aspect, the present invention is also directed to a computer program product as set out in independent claim 11.

### BRIEF DESCRIPTION OF THE DRAWINGS

The present invention will be explained in more detail, by way of example, with reference to the drawings, in which:
- Figure 1: shows a block diagram schematically illustrating a mobile communication device connected to a cloud-based computer system via a communication network and to an HVAC component;
- Figure 2: shows a flow diagram illustrating an exemplary sequence of steps of generating for a user augmented reality information related to an HVAC component;
- Figure 3: shows an illustration of a mobile communication device displaying augmented reality information related to an HVAC component which is not visible;
- Figure 4: shows an illustration of a mobile communication device displaying augmented reality information related to an HVAC component including a damper blade which is not visible;
- Figure 5: shows a flow diagram illustrating an exemplary sequence of steps of generating a control command for an operation of an HVAC component, execution of the operation by the HVAC component and comparing target status information with current status information of the HVAC component.

### DETAILED DESCRIPTION OF EXEMPLARY EMBODIMENTS

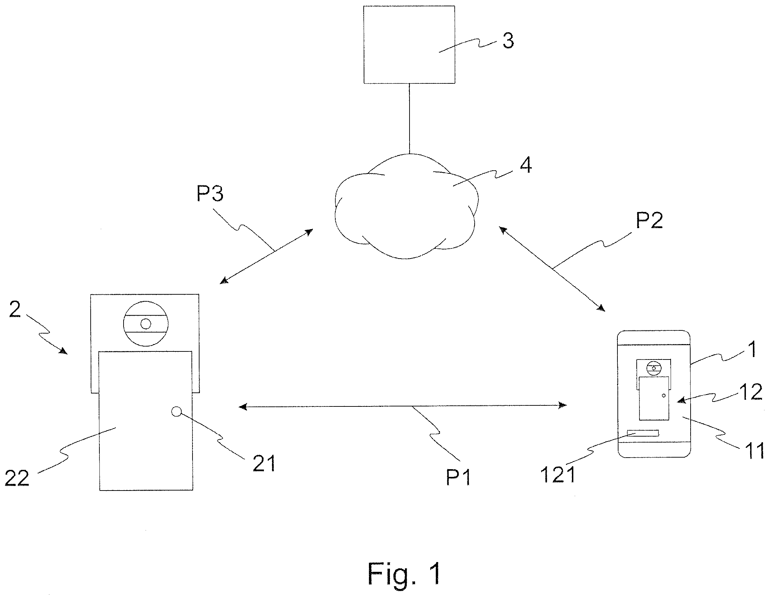

Figure 1 shows a block diagram schematically illustrating a mobile communication device 1 such as a smartphone of a user, for example a field worker, standing in front of an HVAC component 2 for on-site inspection. The mobile communication device 1 comprises an electronic circuit, e.g. a processor, an application specific integrated circuit (ASIC) or another logic unit configured to perform various functions and steps described below in more detail. The mobile communication device 1 is connected to a cloud-based computer system 3 via a communication network 4 and to the HVAC component 2. The HVAC component 2 is also connected to the cloud-based computer system 3 via the communication network 4. The communication links are symbolized by the double arrows P1, P2 and P3. The HVAC component 2 as shown in Figure 1 is an HVAC actuator, but may be any other HVAC component known to the person skilled in the art. The HVAC component 2 comprises an LED 21 arranged on a housing 22 of the HVAC component 2. The mobile communication device 1 obtains a component identification encoded in a blinking pattern of the LED 21 through the communication link P1. In some embodiments, the LED 21 may be part of a Li-Fi system, such that the component identification is obtained non-visually, since the switching rate of the LED 21 is too high for the human eye to be recognized. In further embodiments, the HVAC component 2 may comprise a bar code, QR code, RFID Tag or a Bluetooth or other wireless communication module through which the component identification may be obtained by a circuit of the mobile communication device 1.

Upon obtaining the component identification of the HVAC component 2, the circuit of the mobile communication device 1 generates augmented reality information 12 using the component identification and displays the augmented reality information 12 on the display 11 of the mobile communication device 1. In the example as shown in Figure 1, the augmented reality information 12 comprises an image of the HVAC component 2. Within the augmented reality information 12, there is displayed a user interface element 121 for initiating an operation of the HVAC component 2. Responsive to activation of the user interface element 121, the circuit of the mobile communication device 1 generates a control command for the operation of the HVAC component 2 and transmits the control command via the cloud-based computer system 3 and the communication network 4 to the HVAC component 2 (arrows P2 and P3). Upon transmission of the control command, the HVAC component 2 performs the operation according to the control command.

If the HVAC component 2 is installed as specified in the cloud-based computer system 3, the user may visually recognize execution of the operation by the HVAC component 2 in front of which he is standing. If the HVAC component 2 is not installed as specified in the cloud-based computer system 3, for example due to wrong wiring or broken cabling, the HVAC component 2 will not execute the operation as commanded via the cloud-based computer system 3 and this will be recognized visually by the user. If the HVAC component 2 is installed in a visible position and the operation commanded is directed to an operation which can be externally recognized, the user may verify the execution of the operation by eye.

The execution of the operation is displayed within the augmented reality information 12, for example by a color code. For this purpose, the circuit of the mobile communication device 1 receives current status information from the HVAC component 2 in which execution of the operation may be encoded. The current status information is transmitted using the LED 21 in the shown example. In other embodiments, the current status information may be transmitted using a communication module of the HVAC component 2, for example a Bluetooth module. In the shown example, the image of the HVAC component 2, as shown within the augmented reality information 21, will be displayed in a specific first color, e.g. in green, if the mobile communication device 1 receives current status information from the HVAC component 2 which indicates that the commanded operation has successfully been executed. On the other hand, the image of the HVAC component 2, as shown within the augmented reality information 21, will be displayed in a specific second color, e.g. in red, if the current status information, received from the HVAC component 2, does not indicate successful execution of the commanded operation.

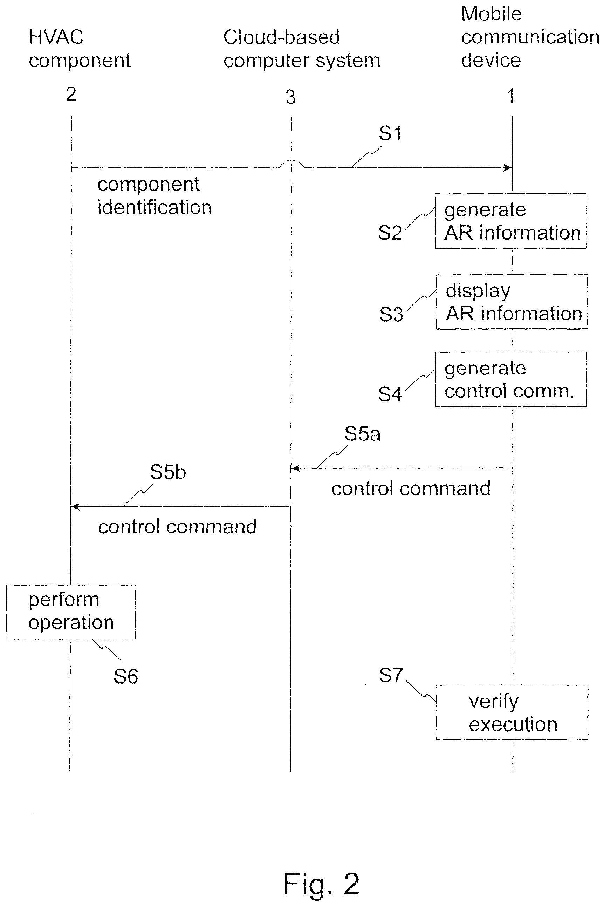

Figure 2 shows a flow diagram illustrating an exemplary sequence of steps of generating for a user augmented reality information related to the HVAC component 2. In step S1 , the circuit of the mobile communication device 1 obtains a component identification from the HVAC component 2. Using the component identification, the circuit of the mobile communication device 1 generates in step S2 the augmented reality (AR) information and displays in step S3 the augmented reality information in the display unit connected to the mobile communication device 1. In step S4, the circuit generates a control command for an operation of the HVAC component 2 responsive to activation of a user interface element displayed within the augmented reality information. The control command includes the component identification and is transmitted to the cloud-based computer system in step S5a.

In step S5b, the cloud-based computer system 3 transmits the control command to the HVAC component 2 identified by the component identification, commanding the HVAC component 2 to perform the operation according to the control command. In step S6, responsive to the received control command, the HVAC component 2 executes the respective operation. Finally, in step S7, the user may visually verify whether or not the HVAC component 2 has actually executed the operation.

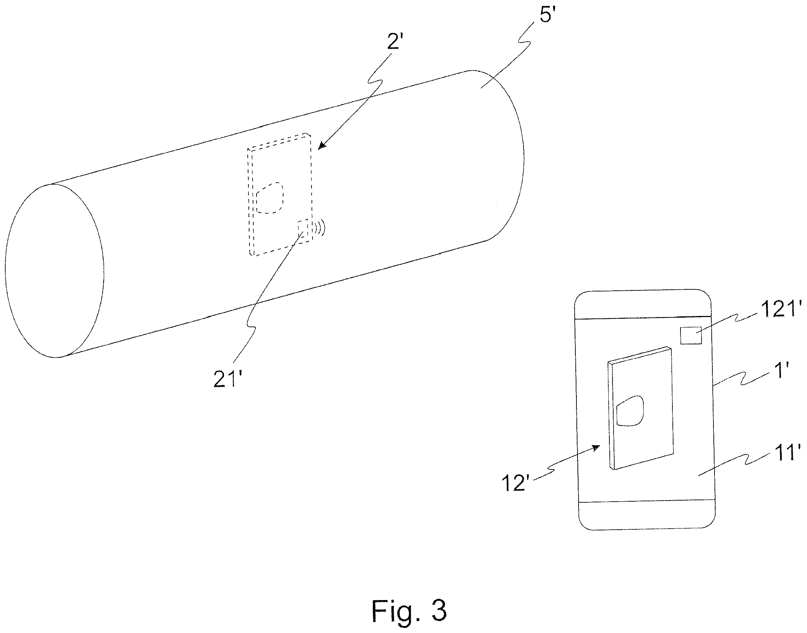

Figure 3 shows an illustration of a mobile communication device 1' displaying augmented reality information 12' related to an HVAC component 2' which is installed in a duct 5' and therefore not actually externally visible for a user of the mobile communication device 1'. The HVAC component 2' is indicated by broken lines in order to illustrate the non-visibility. In the example as shown in Figure 3, the HVAC component 2' is a flow sensor installed in the duct 5'. The HVAC component 2' comprises a Bluetooth or other wireless communication module 21' by which a circuit of the mobile communication device 1' obtains a component identification of the HVAC component 2'. Using the component identification, the circuit of the mobile communication device 1' generates the augmented reality information 12' on a display 11'. The augmented reality information 12' comprises a user interface element 121' for initiating an operation of the HVAC component 2'. Since the HVAC component 2' is installed inside the duct 5', the mobile communication device 1' displaying the augmented reality information 12' makes it possible to visualize the HVAC component 2' for a user. Furthermore, the user interface element 121' enables to initiate an operation of the HVAC component 2' which would not be accessible manually. The circuit of the mobile communication device 1' generates, responsive to activation of the user interface element 121', a control command for the operation of the HVAC component 2' and transmits the control command via a cloud-based computer system to the HVAC component 2', as described for Figure 1 or 2.

For example, the user interface element 121' initiates a sensing of the flow in the duct 5' over a time interval Δt. Using the Bluetooth module 21', current status information of the HVAC component 2', e.g. the sensed flow values in the duct 5' during the time interval Δt can be directly received by the circuit of the mobile communication device 11' allowing to verify correct installation or functioning of the HVAC component 2' by the circuit of the mobile communication device 1'. The circuit of the mobile communication device 1' receives from the cloud-based computer system a target status information of the HVAC component 2' including an expected average flow for the duct 5' and compares said expected average flow with a sensed average flow calculated from the sensed flow values, allowing to verify and visualize correct or erroneous functioning of the HVAC component 2' within the augmented reality information 12'.

For not actually externally visible HVAC components, in particular, as shown in the example of Figure 3, transmission of the current status information from the HVAC component 2' to the circuit of the mobile communication device 1' via the cloud-based computer system, and not directly to the circuit of the mobile communication device 1', could yield an erroneous information about the correct installation or functioning of the HVAC component 2' due to the HVAC component 2' not being actually externally visible for the user. For example, the control command could be transmitted to another HVAC component of the HVAC system, e.g. due to wrong wiring, which other HVAC component executes the commanded operation. The mobile communication device 1' could receive from the cloud-based computer system current status information, as transmitted by the other HVAC component, indicating successful execution of the commanded operation, leading to the potentially erroneous conclusion that the HVAC component 2' to be inspected is correctly functioning. Therefore, in accordance with the claimed invention, generating a control command by the circuit of the mobile communication device 1', transmission of the control command via the cloud-based computer system to the HVAC component, and receiving current status information about the execution of the operation directly by the HVAC component 2' allows correct inspection of the HVAC component 2' in question.

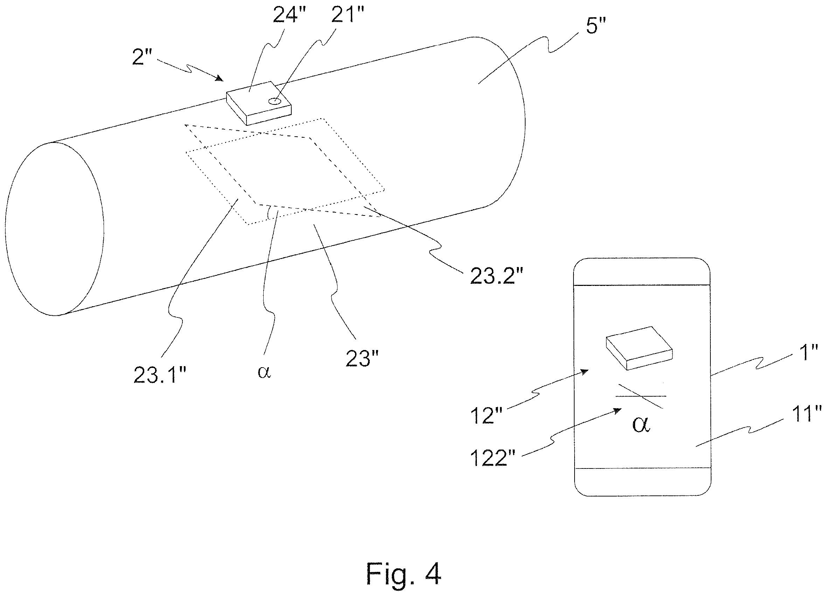

Figure 4 shows an illustration of a mobile communication device 1" displaying on a display 11" augmented reality information 12" related to an HVAC component 2" including a damper blade 23" which is installed inside a duct 5" and therefore not actually externally visible. The HVAC component 2" further includes an actuator 24" which is configured to rotate the damper blade 23". The HVAC component 2" further includes a communication module 21", for example a Bluetooth or another wireless communication module, from which a circuit of the mobile communication device 1" obtains a component identification of the HVAC component 2". The augmented reality information 12" visualizes execution of a rotation of the damper blade 23" by an angle α by displaying a current status visualization 1 22", as generated from current status information received from the HVAC component 2". In Figure 4, two exemplary configurations 23.1", 23.2" of the damper blade 23" are shown, between which the damper blade 23" has been rotated by an angle α due to a control command generated by the circuit of the mobile communication device 1" and transmitted via a cloud-based computer system to the HVAC component 2", especially to the HVAC actuator 24". A user of the mobile communication device 1" can therefore verify whether the commanded operation of rotating the damper blade 23" by an angle α has been executed by the HVAC component 2" using the augmented reality information 12" and the current status visualization 122" displayed therein.

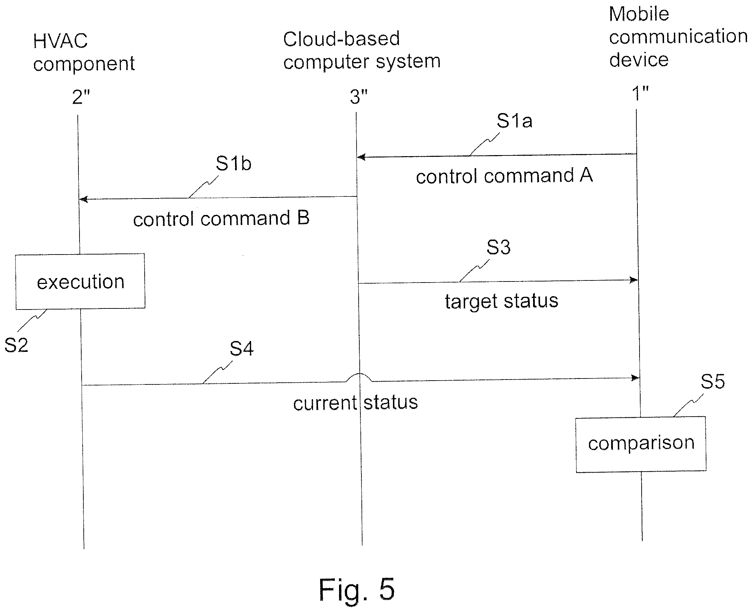

Figure 5 shows a flow diagram illustrating an exemplary sequence of steps of transmitting a control command for an operation of the HVAC component 2", execution of the operation by the HVAC component 2" and comparing target status information with current status information of the HVAC component 2". A control command A, which includes a component identification of HVAC component 2", is generated by the circuit of the mobile communication device 1" and transmitted to the cloud-based computer system 3" in step S1a. The cloud-based computer system transmits a corresponding control command B to the HVAC component 2", defined by the received component identification, in step S1b. In step S2, the HVAC component 2" executes the commanded operation. Before, after or during execution, the mobile communication device 1" receives from the cloud-based computer system 3" target status information related to the control command in step S3. In step S4, the mobile communication device 1" receives current status information S4 from the HVAC component 2" after execution of the commanded operation. Based on a comparison of the current status information with the target status information in step S5, the circuit of the mobile communication device 1" generates augmented reality information, enabling visual verification of the execution of the operation by the HVAC component 2". In particular, the circuit of the mobile communication device 1" displays within the augmented reality information a confirmation notification for a correspondence of the current status information and the target status information, and an error notification for a deviation of the current status information from the target status information.

For the example as shown in Figure 4, the control command could be "rotation of the damper blade 23" by an angle α" and accordingly, the target status information as received from the cloud-based computer system would be "damper blade is rotated by the angle α". If the damper blade 23" has been rotated by the angle α upon transmission of the control command, the current status information received from the HVAC component 2" corresponds to the target status information and a confirmation notification is displayed within the augmented reality information. In this simple example control command A and control command B are equal.

In some embodiments, however, the control command A is more general. For example, the control command A could be "check whether the power supply of the HVAC component 2" is working". In this case, the cloud-based computer system 3" could translate the control command A into a control command B: "check whether the power supply of the HVAC component 2" is working by turning the damper blade 23" by an angle α". The target status information as received from the cloud-based computer system 3" is then "damper blade is rotated by the angle α" and the user can verify that the HVAC component 2" is supplied with power by comparing the target status information with current status information from the HVAC component 2" indicating whether the damper blade 23" has in fact been rotated by α". The confirmation notification could for example be "the HVAC component 2" is correctly supplied with power". Optionally, the confirmation notification within the augmented reality information could include the information: "This has been verified by rotating the damper blade 23" by α".

### LIST OF REFERENCE SYMBOLS

- 1, 1', 1": mobile communication device
- 11, 11', 11": display
- 12, 12', 12": augmented reality information
- 121, 121': user interface element
- 122": current status visualization
- 2, 2', 2": HVAC component
- 21: LED
- 21': Bluetooth module
- 21": communication module
- 22: housing
- 23": damper blade
- 23.1", 23.2": configuration of the damper blade
- 24": HVAC actuator
- 3, 3": cloud-based computer system
- 4: communication network
- 5, 5": duct
- α: angle
- P1, P2, P3: communication link

## Claims

1. A method of generating for a user augmented reality information (12, 12', 12") related to an HVAC component (2, 2', 2"), the method comprising a circuit of a mobile communication device (1, 1', 1") executing the following steps:
generating an identification command;
transmitting the identification command via a cloud-based computer system (3, 3") to the HVAC component (2, 2', 2"), the identification command commanding the HVAC component (2, 2', 2") to generate a component identification;
obtaining the component identification of the HVAC component (2, 2', 2") by the mobile communication device (1, 1', 1") from the HVAC component (2, 2', 2");
generating the augmented reality information (12, 12', 12") related to the HVAC component (2, 2', 2") using the component identification, the augmented reality information (12, 12', 12") including a displayable user interface element (121, 121') for initiating an operation of the HVAC component (2, 2', 2");
displaying the augmented reality information (12, 12', 12") on a display unit (11, 11', 11") connected to the mobile communication device (1, 1', 1");
generating, responsive to activation of the user interface element (121, 121', 1 21"), a control command for the operation of the HVAC component (2, 2', 2") and transmitting the control command via the cloud-based computer system (3, 3") to the HVAC component (2, 2', 2"), commanding the HVAC component (2, 2', 2") to perform the operation; and
the circuit of the mobile communication device (1, 1', 1") receiving current status information directly from the HVAC component (2, 2', 2") after execution of the commanded operation by the HVAC component (2, 2', 2"), and generating augmented reality information (12, 12', 12") which visualizes execution of the operation by the HVAC component (2, 2', 2"), using the current status information, to enable visual verification of the operation of the HVAC component (2, 2', 2") by the user when the HVAC component (2, 2', 2") is not visible to the user.

2. The method of claim 1, further comprising the circuit of the mobile communication device (1, 1', 1") receiving from the cloud-based computer system (3, 3', 3") target status information of the HVAC component (2, 2', 2") related to the control command, and generating augmented reality information (12, 12', 12") using a comparison of current status information received from the HVAC component (2, 2', 2") with the target status information of the HVAC component (2, 2', 2") received from the cloud-based computer system (3, 3").

3. The method of claim 2, further comprising the circuit of the mobile communication device (1, 1', 1") displaying within the augmented reality information (12, 12', 12") a confirmation notification for a correspondence of the current status information and the target status information, and an error notification for a deviation of the current status information from the target status information.

4. The method of one of claims 1 to 3, further comprising the circuit of the mobile communication device (1, 1', 1") receiving from the cloud-based computer system (3, 3") lifetime information related to the HVAC component (2, 2', 2"), and displaying the lifetime information within the augmented reality information (12, 12', 12").

5. The method of one of claims 1 to 4, further comprising the circuit of the mobile communication device (1, 1', 1") displaying within the augmented reality information (12, 12', 12") a drilling template for drilling holes.

6. A mobile communication device (1, 1', 1") for generating for a user augmented reality information (12, 12', 12") related to an HVAC component (2, 2', 2"), the mobile communication device (1, 1', 1") comprising a circuit configured to:
generate an identification command;
transmit the identification command via a cloud-based computer system (3, 3") to the HVAC component (2, 2', 2"), the identification command commanding the HVAC component (2, 2', 2") to generate a component identification;
obtain the component identification of the HVAC component (2, 2', 2") from the HVAC component (2, 2', 2");
generate the augmented reality information (12, 12', 12") related to the HVAC component (2, 2', 2") using the component identification, the augmented reality information (12, 12', 12") including a displayable user interface element (121, 121') for initiating an operation of the HVAC component (2, 2', 2");
display the augmented reality information (12, 12', 12") on a display unit (11, 11', 11") connected to the mobile communication device (1, 1', 1");
generate, responsive to activation of the user interface element (121, 121'), a control command for the operation of the HVAC component (2, 2', 2"), and transmit the control command via the cloud-based computer system (3, 3") to the HVAC component (2, 2', 2") to command the HVAC component (2, 2', 2") to perform the operation;
receive current status information directly from the HVAC component (2, 2', 2") after execution of the commanded operation by the HVAC component (2, 2', 2"); and
generate augmented reality information (12, 12', 12") which visualizes execution of the operation by the HVAC component (2, 2', 2"), using the current status information, to enable visual verification of the operation of the HVAC component (2, 2', 2") by the user when the HVAC component (2, 2', 2") is not visible to the user.

7. The mobile communication device (1, 1', 1") of claim 6, wherein the circuit is further configured to receive from the cloud-based computer system (3, 3") target status information of the HVAC component (2, 2', 2") related to the control command, and to generate augmented reality information (12, 12', 12") using a comparison of current status information received from the HVAC component (2, 2', 2") with the target status information of the HVAC component (2, 2', 2") received from the cloud-based computer system (3, 3").

8. The mobile communication device (1, 1', 1") of claim 7, wherein the circuit is further configured to display within the augmented reality information (12, 12', 12") a confirmation notification for a correspondence of the current status information and the target status information, and an error notification for a deviation of the current status information form the target status information.

9. The mobile communication device (1, 1', 1") of one of claims 6 to 8, wherein the circuit is further configured to receive from the cloud-based computer system (3, 3") lifetime information related to the HVAC component (2, 2', 2") and to display the lifetime information within the augmented reality information (12, 12', 12").

10. The mobile communication device (1, 1', 1") of one of claims 6 to 9, wherein the circuit is further configured to display within the augmented reality information (12, 12', 12") a drilling template for drilling holes.

11. A computer program product comprising a non-transient computer readable medium having stored thereon computer program code configured to control a circuit of a mobile communication device (1, 1', 1") such that the circuit executes the steps of:
generating an identification command;
transmitting the identification command via a cloud-based computer system (3, 3") to an HVAC component (2, 2', 2"), the identification command commanding the HVAC component (2, 2', 2") to generate a component identification;
obtaining the component identification of the HVAC component (2, 2', 2") from the HVAC component (2, 2', 2");
generating for a user augmented reality information (12, 12', 12") related to the HVAC component (2, 2', 2") using the component identification, the augmented reality information (12, 12', 12") including a displayable user interface element (121, 1 21') for initiating an operation of the HVAC component (2, 2', 2");
displaying the augmented reality information (12, 12', 12") on a display unit (11, 11', 11") connected to the mobile communication device (1, 1', 1");
generating, responsive to activation of the user interface element (121, 121'), a control command for the operation of the HVAC component (2, 2', 2"), and transmitting the control command via the cloud-based computer system (3, 3") to the HVAC component (2, 2', 2"), commanding the HVAC component (2, 2', 2") to perform the operation;
receiving current status information directly from the HVAC component (2, 2', 2") after execution of the commanded operation by the HVAC component (2, 2', 2"); and
generating augmented reality information (12, 12', 12") which visualizes execution of the operation by the HVAC component (2, 2', 2"), using the current status information, to enable visual verification of the operation of the HVAC component (2, 2', 2") by the user when the HVAC component (2, 2', 2") is not visible to the user.

## Patentansprüche

1. Verfahren zum Erzeugen von Augmented-Reality-Information (12, 12', 12") für einen Benutzer in Bezug auf eine HLK-Komponente (2, 2', 2"), wobei das Verfahren eine Schaltung einer mobilen Kommunikationsvorrichtung (1, 1', 1") umfasst, die die folgenden Schritte ausführt:
Erzeugen einer Identifikationsanweisung;
Übermitteln der Identifikationsanweisung über ein Cloud-basiertes Computersystem (3, 3") an die HLK-Komponente (2, 2', 2"), wobei die Identifikationsanweisung die HLK-Komponente (2, 2', 2") anweist, eine Komponentenidentifikation zu erzeugen;
Erhalten der Komponentenidentifikation der HLK-Komponente (2, 2', 2") durch die mobile Kommunikationsvorrichtung (1, 1', 1") von der HLK-Komponente (2, 2', 2");
Erzeugen der Augmented-Reality-Information (12, 12', 12") in Bezug auf die HLK-Komponente (2, 2', 2") unter Verwendung der Komponentenidentifikation, wobei die Augmented-Reality-Information (12, 12', 12") ein anzeigbares Benutzerschnittstellenelement (121, 121') umfassen, um einen Betrieb der HLK-Komponente (2, 2', 2") zu initiieren;
Anzeigen der Augmented-Reality-Information (12, 12', 1 2") auf einer Anzeigeeinheit (11, 1 1', 11"), die mit der mobilen Kommunikationsvorrichtung (1, 1', 1") verbunden ist;
Erzeugen einer Steueranweisung für den Betrieb der HLK-Komponente (2, 2', 2") als Reaktion auf die Aktivierung des Benutzerschnittstellenelements (121, 121', 121") und Übermitteln der Steueranweisung über das Cloud-basierte Computersystem (3, 3") an die HLK-Komponente (2, 2', 2"), wobei die HLK-Komponente (2, 2', 2") angewiesen wird, den Betrieb durchzuführen; und
die Schaltung der mobilen Kommunikationsvorrichtung (1, 1', 1") empfängt aktuelle Statusinformation direkt von der HLK-Komponente (2, 2', 2") nach Ausführung des angewiesenen Betriebs durch die HLK-Komponente (2, 2', 2") und erzeugt Augmented-Reality-Information (12, 12', 12"), die die Ausführung des Betriebs durch die HLK-Komponente (2, 2', 2") unter Verwendung der aktuellen Statusinformation visualisiert, um eine visuelle Überprüfung des Betriebs der HLK-Komponente (2, 2', 2") durch den Benutzer zu ermöglichen, wenn die HLK-Komponente (2, 2', 2") für den Benutzer nicht sichtbar ist.

2. Verfahren nach Anspruch 1, das ferner umfasst, dass die Schaltung der mobilen Kommunikationsvorrichtung (1, 1', 1") von dem Cloud-basierten Computersystem (3, 3', 3") Zielstatusinformation der HLK-Komponente (2, 2', 2") empfängt, die sich auf die Steueranweisung beziehen, und Erzeugen von Augmented-Reality-Information (12, 12', 12") unter Verwendung eines Vergleichs von aktueller Statusinformation, die von der HLK-Komponente (2, 2', 2") empfangen werden, mit der Zielstatusinformation der HLK-Komponente (2, 2', 2"), die von dem Cloud-basierten Computersystem (3, 3") empfangen werden.

3. Das Verfahren nach Anspruch 2, das ferner umfasst, dass die Schaltung der mobilen Kommunikationsvorrichtung (1, 1', 1"), die innerhalb der Augmented-Reality-Information (12, 12', 12") eine Bestätigungsmeldung für eine Übereinstimmung der aktuellen Statusinformation und der Zielstatusinformation sowie eine Fehlermeldung für eine Abweichung der aktuellen Statusinformation von der Zielstatusinformation anzeigt.

4. Verfahren nach einem der Ansprüche 1 bis 3, das ferner umfasst, dass die Schaltung der mobilen Kommunikationsvorrichtung (1, 1', 1"), von dem Cloud-basierten Computersystem (3, 3") Information über die Lebensdauer der HLK-Komponente (2, 2', 2") empfängt und die Information über die Lebensdauer innerhalb der Augmented-Reality-Information (12, 12', 12") anzeigt.

5. Verfahren nach einem der Ansprüche 1 bis 4, das ferner umfasst, dass die Schaltung der mobilen Kommunikationsvorrichtung (1, 1', 1") innerhalb der Augmented-Reality-Information (12, 12', 12") eine Bohrschablone für Bohrlöcher anzeigt.

6. Eine mobile Kommunikationsvorrichtung (1, 1', 1") zum Erzeugen von Augmented-Reality-Information (12, 12', 12") für einen Benutzer, die sich auf eine HLK-Komponente (2, 2', 2") beziehen, wobei die mobile Kommunikationsvorrichtung (1, 1', 1") eine Schaltung umfasst, die konfiguriert ist zum:
Erzeugen einer Identifikationsanweisung;
Übermitteln der Identifikationsanweisung über ein Cloud-basiertes Computersystem (3, 3") an die HLK-Komponente (2, 2', 2"), wobei die Identifikationsanweisung die HLK-Komponente (2, 2', 2") anweist, eine Komponentenidentifikation zu erzeugen;
Erhalten der Komponentenidentifikation der HLK-Komponente (2, 2', 2") von der HLK-Komponente (2, 2', 2");
Erzeugen der Augmented-Reality-Information (12, 12', 12") in Bezug auf die HLK-Komponente (2, 2', 2") unter Verwendung der Komponentenidentifikation, wobei die Augmented-Reality-Information (12, 12', 12") ein anzeigbares Benutzerschnittstellenelement (121, 121') umfasst, um einen Betrieb der HLK-Komponente (2, 2', 2") zu initiieren;
Anzeigen der Augmented-Reality-Information (12, 12', 1 2") auf einer Anzeigeeinheit (11, 1 1', 11"), die mit der mobilen Kommunikationsvorrichtung (1, 1', 1") verbunden ist;
Erzeugen einer Steueranweisung für den Betrieb der HLK-Komponente (2, 2', 2") als Antwort auf die Aktivierung des Benutzerschnittstellenelements (121, 121') und Übermitteln der Steueranweisung über das Cloud-basierte Computersystem (3, 3") an die HLK-Komponente (2, 2', 2"), um die HLK-Komponente (2, 2', 2") anzuweisen, den Betrieb durchzuführen;
Empfangen von aktuellen Statusinformation direkt von der HLK-Komponente (2, 2', 2") nach Ausführung des angewiesenen Betriebs durch die HLK-Komponente (2, 2', 2"); und
Erzeugen von Augmented-Reality-Information (12, 12', 12"), die die Ausführung des Betriebs durch die HLK-Komponente (2, 2', 2") visualisieren, unter Verwendung der aktuellen Statusinformation, um eine visuelle Überprüfung des Betriebs der HLK-Komponente (2, 2', 2") durch den Benutzer zu ermöglichen, wenn die HLK-Komponente (2, 2', 2") für den Benutzer nicht sichtbar ist.

7. Die mobile Kommunikationsvorrichtung (1, 1', 1") nach Anspruch 6, wobei die Schaltung weiterhin konfiguriert ist, um von dem Cloud-basierten Computersystem (3, 3") Zielstatusinformation der HLK-Komponente (2, 2', 2") zu empfangen, die sich auf die Steueranweisung beziehen, und zum Erzeugen von Augmented-Reality-Information (12, 12', 12") unter Verwendung eines Vergleichs von aktuellen Statusinformation, die von der HLK-Komponente (2, 2', 2") empfangen werden, mit den Zielstatusinformation der HLK-Komponente (2, 2', 2"), die von dem Cloud-basierten Computersystem (3, 3") empfangen werden.

8. Die mobile Kommunikationsvorrichtung (1, 1', 1") nach Anspruch 7, wobei die Schaltung weiterhin konfiguriert ist, um innerhalb der Augmented-Reality-Information (12, 12', 12") eine Bestätigungsmeldung für eine Übereinstimmung der aktuellen Statusinformation und der Zielstatusinformation und eine Fehlermeldung für eine Abweichung der aktuellen Statusinformation von der Zielstatusinformation anzuzeigen.

9. Die mobile Kommunikationsvorrichtung (1, 1', 1") nach einem der Ansprüche 6 bis 8, wobei die Schaltung ferner so konfiguriert ist, dass sie von dem Cloud-basierten Computersystem (3, 3") Information über die Lebensdauer der HLK-Komponente (2, 2', 2") empfängt und die Information über die Lebensdauer innerhalb der Augmented-Reality-Information (12, 12', 12") anzeigt.

10. Die mobile Kommunikationsvorrichtung (1, 1', 1") nach einem der Ansprüche 6 bis 9, wobei die Schaltung ferner so konfiguriert ist, dass sie innerhalb der Augmented-Reality-Information (12, 12', 12") eine Bohrschablone für Bohrlöcher anzeigt.

11. Computerprogrammprodukt, das ein nicht flüchtiges computerlesbares Medium umfasst, auf dem Computerprogrammcode gespeichert ist, der so konfiguriert ist, dass er eine Schaltung einer mobilen Kommunikationsvorrichtung (1, 1', 1") so steuert, dass die Schaltung die folgenden Schritte ausführt:
Erzeugen einer Identifikationsanweisung;
Übermitteln der Identifikationsanweisung über ein Cloud-basiertes Computersystem (3, 3") an eine HLK-Komponente (2, 2', 2"), wobei die Identifikationsanweisung die HLK-Komponente (2, 2', 2") anweist, eine Komponentenidentifikation zu erzeugen;
Erhalten der Komponentenidentifikation der HLK-Komponente (2, 2', 2") aus der HLK-Komponente (2, 2', 2");
Erzeugen von Augmented-Reality-Information (12, 12', 12") für einen Benutzer in Bezug auf die HLK-Komponente (2, 2', 2") unter Verwendung der Komponentenidentifikation, wobei die Augmented-Reality-Information (12, 12', 12") ein anzeigbares Benutzerschnittstellenelement (121, 121') zum Initiieren eines Betriebs der HLK-Komponente (2, 2', 2") umfasst;
Anzeigen der Augmented-Reality-Information (12, 12', 1 2") auf einer Anzeigeeinheit (11, 1 1', 11"), die mit der mobilen Kommunikationsvorrichtung (1, 1', 1") verbunden ist;
Erzeugen einer Steueranweisung für den Betrieb der HLK-Komponente (2, 2', 2") als Antwort auf die Aktivierung des Benutzerschnittstellenelements (121, 121') und Übermitteln der Steueranweisung über das Cloud-basierte Computersystem (3, 3") an die HLK-Komponente (2, 2', 2"), wobei die HLK-Komponente (2, 2', 2") angewiesen wird, den Betrieb durchzuführen;
Empfangen von aktueller Statusinformation direkt von der HLK-Komponente (2, 2', 2") nach Ausführung des angewiesenen Betriebs durch die HLK-Komponente (2, 2', 2"); und
Erzeugen von Augmented-Reality-Information (12, 12', 12"), die die Ausführung des Betriebs durch die HLK-Komponente (2, 2', 2") visualisiert, unter Verwendung der aktuellen Statusinformation, um eine visuelle Überprüfung des Betriebs der HLK-Komponente (2, 2', 2") durch den Benutzer zu ermöglichen, wenn die HLK-Komponente (2, 2', 2") für den Benutzer nicht sichtbar ist.

## Revendications

1. Procédé de génération pour un utilisateur des informations de réalité augmentée (12, 12', 12") relatives à un composant CVC (2, 2', 2"), le procédé comprenant un circuit d'un dispositif de communication mobile (1, 1', 1") exécutant les étapes suivantes :
générer une commande d'identification ;
transmettre la commande d'identification via un système informatique en nuage (3, 3") au composant CVC (2, 2', 2"), la commande d'identification commandant au composant CVC (2, 2', 2") de générer une identification de composant ;
obtenir l'identification du composant du CVC (2, 2', 2") par le dispositif de communication mobile (1, 1', 1") à partir du composant du CVC (2, 2', 2") ;
générer les informations de réalité augmentée (12, 12', 12") relatives au composant CVC (2, 2', 2") à l'aide de l'identification du composant, les informations de réalité augmentée (12, 12', 12") comprenant un élément d'interface utilisateur affichable (121, 121') permettant de lancer un fonctionnement du composant CVC (2, 2', 2") ;
afficher les informations de réalité augmentée (12, 12', 12") sur une unité d'affichage (11, 11', 11") connectée au dispositif de communication mobile (1, 1', 1") ;
générer, en réponse à l'activation de l'élément d'interface utilisateur (121, 121', 121 "), une commande de contrôle pour le fonctionnement du composant CVC (2, 2', 2") et transmettre la commande de contrôle via le système informatique en nuage (3, 3") au composant CVC (2, 2', 2"), en commandant au composant CVC (2, 2', 2") d'effectuer le fonctionnement ; et
le circuit du dispositif de communication mobile (1, 1', 1") reçoit des informations d'état actuel directement du composant CVC (2, 2', 2") après l'exécution du fonctionnement commandée par le composant CVC (2, 2', 2"), et génère des informations de réalité augmentée (12, 12", 12") qui visualise l'exécution du fonctionnement par le composant CVC (2, 2', 2"), à l'aide des informations sur l'état actuel, pour permettre la vérification visuelle du fonctionnement du composant CVC (2, 2', 2") par l'utilisateur lorsque le composant CVC (2, 2', 2") n'est pas visible pour l'utilisateur.

2. Le procédé de la revendication 1, comprenant en outre le circuit du dispositif de communication mobile (1, 1', 1") recevant du système informatique en nuage (3, 3', 3") des informations d'état cible du composant CVC (2, 2', 2") liées à la commande de contrôle, et générer des informations de réalité augmentée (12, 12', 12") à l'aide d'une comparaison des informations d'état actuelles reçues du composant CVC (2, 2', 2") avec les informations d'état cibles du composant CVC (2, 2', 2") reçues du système informatique en nuage (3, 3").

3. Le procédé de la revendication 2, comprenant en outre le circuit du dispositif de communication mobile (1, 1', 1") affichant à l'intérieur des informations de réalité augmentée (12, 12', 12") une notification de confirmation pour une correspondance des informations d'état actuel et des informations d'état cible, et une notification d'erreur pour un écart des informations d'état actuel par rapport aux informations d'état cible.

4. Le procédé de l'une des revendications 1 à 3, comprenant en outre le circuit du dispositif de communication mobile (1, 1', 1") recevant du système informatique en nuage (3, 3") des informations de durée de vie relatives au composant CVC (2, 2', 2"), et affichant les informations de durée de vie dans les informations de réalité augmentée (12, 12', 12").

5. Le procédé de l'une des revendications 1 à 4, comprenant en outre le circuit du dispositif de communication mobile (1, 1', 1") affichant au sein des informations de réalité augmentée (12, 1 2', 12") un gabarit de perçage pour percer des trous.

6. Dispositif de communication mobile (1, 1', 1") permettant de générer pour un utilisateur des informations de réalité augmentée (12, 12', 12") relatives à un composant CVC (2, 2', 2"), le dispositif de communication mobile (1, 1', 1") comprenant un circuit configuré pour :
générer une commande d'identification ;
transmettre la commande d'identification via un système informatique en nuage (3, 3") au composant CVC (2, 2', 2"), la commande d'identification commandant au composant CVC (2, 2', 2") de générer une identification de composant ;
obtenir l'identification du composant du CVC (2, 2', 2") à partir du composant du CVC (2, 2', 2") ;
générer les informations de réalité augmentée (12, 12', 12") relatives au composant CVC (2, 2', 2") à l'aide de l'identification du composant, les informations de réalité augmentée (12, 12', 12") comprenant un élément d'interface utilisateur affichable (121, 121') permettant de lancer un fonctionnement du composant CVC (2, 2', 2") ;
afficher les informations de réalité augmentée (12, 12', 12") sur une unité d'affichage (11, 11', 11") connectée au dispositif de communication mobile (1, 1', 1") ;
générer, en réponse à l'activation de l'élément d'interface utilisateur (121, 121'), une commande de contrôle pour le fonctionnement du composant CVC (2, 2', 2"), et transmettre la commande de contrôle via le système informatique en nuage (3, 3") au composant CVC (2, 2', 2") pour commander au composant CVC (2, 2', 2") d'effectuer le fonctionnement ;
recevoir des informations sur l'état actuel directement du composant CVC (2, 2', 2") après l'exécution du fonctionnement commandé par le composant CVC (2, 2', 2") ; et
générer des informations de réalité augmentée (12, 12', 12") qui visualisent l'exécution du fonctionnement par le composant CVC (2, 2', 2"), à l'aide des informations sur l'état actuel, afin de permettre la vérification visuelle du fonctionnement du composant CVC (2, 2', 2") par l'utilisateur lorsque le composant CVC (2, 2', 2") n'est pas visible pour l'utilisateur.

7. Le dispositif de communication mobile (1, 1', 1") de la revendication 6, dans lequel le circuit est en outre configuré pour recevoir du système informatique en nuage (3, 3") des informations d'état cible du composant CVC (2, 2', 2") liées à la commande de contrôle, et à générer des informations de réalité augmentée (12, 12', 12") à l'aide d'une comparaison des informations d'état actuelles reçues du composant CVC (2, 2', 2") avec les informations d'état cible du composant CVC (2, 2', 2") reçues du système informatique en nuage (3, 3").

8. Le dispositif de communication mobile (1, 1', 1") de la revendication 7, dans lequel le circuit est en outre configuré pour afficher dans les informations de réalité augmentée (12, 12', 12") une notification de confirmation pour une correspondance des informations d'état actuel et des informations d'état cible, et une notification d'erreur pour un écart des informations d'état actuel par rapport aux informations d'état cible.

9. Le dispositif de communication mobile (1, 1', 1") de l'une des revendications 6 à 8, dans lequel le circuit est en outre configuré pour recevoir du système informatique en nuage (3, 3") des informations de durée de vie relatives au composant CVC (2, 2', 2") et pour afficher les informations de durée de vie dans les informations de réalité augmentée (12, 12', 12").

10. Le dispositif de communication mobile (1, 1', 1") de l'une des revendications 6 à 9, dans lequel le circuit est en outre configuré pour afficher dans les informations de réalité augmentée (12, 1 2', 12") un gabarit de perçage pour percer des trous.

11. Produit programme d'ordinateur comprenant un support lisible par ordinateur non transitoire sur lequel est stocké un code programme d'ordinateur configuré pour commander un circuit d'un dispositif de communication mobile (1, 1', 1") de sorte que le circuit exécute les étapes de :
générer une commande d'identification ;
transmettre la commande d'identification via un système informatique en nuage (3, 3") à un composant CVC (2, 2', 2"), la commande d'identification commandant au composant CVC (2, 2', 2") de générer une identification de composant ;
obtenir l'identification du composant du CVC (2, 2', 2") à partir du composant du CVC (2, 2', 2") ;
générer pour un utilisateur des informations de réalité augmentée (12, 12', 12") relatives au composant CVC (2, 2', 2") à l'aide de l'identification du composant, les informations de réalité augmentée (12, 12', 12") comprenant un élément d'interface utilisateur affichable (121, 121') pour lancer un fonctionnement du composant CVC (2, 2', 2") ;
afficher les informations de réalité augmentée (12, 12', 12") sur une unité d'affichage (11, 11', 11") connectée au dispositif de communication mobile (1, 1', 1") ;
générer, en réponse à l'activation de l'élément d'interface utilisateur (121, 121'), une commande de contrôle pour le fonctionnement du composant CVC (2, 2', 2"), et transmettre la commande de contrôle via le système informatique en nuage (3, 3") au composant CVC (2, 2', 2"), en commandant au composant CVC (2, 2', 2") d'effectuer le fonctionnement ;
recevoir des informations sur l'état actuel directement du composant CVC (2, 2', 2") après l'exécution du fonctionnement commandé par le composant CVC (2, 2', 2") ; et
générer des informations de réalité augmentée (12, 12', 12") qui visualisent l'exécution du fonctionnement par le composant CVC (2, 2', 2"), à l'aide des informations sur l'état actuel, pour permettre la vérification visuelle du fonctionnement du composant CVC (2, 2', 2") par l'utilisateur lorsque le composant CVC (2, 2', 2") n'est pas visible pour l'utilisateur.
